# EUROPÄISCHE PATENTSCHRIFT

(11) **EP 0 515 603 B1**
(45) Veröffentlichungstag und Bekanntmachung des Hinweises auf die Patenterteilung: **15.09.1993**
(21) Anmeldenummer: 91920888.4
(22) Anmeldetag: 10.12.1991
(51) Int. Cl.: B65D 88/68, B65G 47/14

(54) **VORRICHTUNG ZUR FÖRDERUNG VON IN EINEM VORRATSBEHÄLTER ENTHALTENER WARE IN EINE VORGEGEBENE RICHTUNG**
DEVICE FOR CONVEYING GOODS STORED IN A RESERVOIR IN A PREDETERMINED DIRECTION
DISPOSITIF DE TRANSPORT DANS UNE DIRECTION PREDETERMINEE DE DENREES CONTENUES DANS UN RESERVOIR

(30) Priorität: 12.12.1990 DE 4039678
(43) Veröffentlichungstag der Anmeldung: 02.12.1992
(73) Patentinhaber: BACHMANN, Marco, CH-8044 Zürich (CH)
(72) Erfinder: BACHMANN, Marco, CH-8044 Zürich (CH)
(74) Vertreter: von Foerster, Eckard
(86) Internationale Anmeldenummer: CH9100257
(87) Internationale Veröffentlichungsnummer: WO9210416

(56) Entgegenhaltungen:
- EP-A- 0 105 555
- DE-B- 1 039 939
- FR-A- 2 271 142
- GB-A- 2 146 006
- US-A- 2 393 334

## Beschreibung

Die Erfindung betrifft eine Vorrichtung zur Förderung von in einem Vorratsbehälter enthaltener Ware, wie z.B. Zitrusfrüchten, in eine vorgegebene Richtung. Die Förderrichtung ist vorzugsweise senkrecht zu einer Behälterwand, in der eine Austrittsöffnung für die Einzelabgabe einer Wareneinheit, wie z. B. einer Frucht, vorgesehen ist.

Ein Vorratsbehälter dieser Art in Verbindung mit einer Maschine zum Entsaften der Früchte ist bekannt. Dabei befindet sich oben auf der Maschine ein Vorratsbehälter zur Aufnahme einer grösseren Menge von Zitrusfrüchten, die der Entsaftungsmaschine selbsttätig bis zur Entleerung des Vorratsbehälters zugeliefert werden sollen. Bei dem bekannten Vorratsbehälter sind treppenartig versetzte Bodensektionen vorgesehen, von denen die Früchte in einen Bereich vor der Austrittsöffnung hinunterrollen sollen, und ferner ist in diesem Bereich noch zusätzlich ein die Früchte von unten periodisch stossender Hebelarm vorgesehen, der die Früchte in dem Bereich vor der Austrittsöffnung in Bewegung halten soll.

Die Wirkung dieser bei bekannten Vorratsbehältern vorgesehenen Massnahmen ist jedoch unbefriedigend, weil die in dem Vorratsbehälter in einem Haufen übereinanderliegenden Zitrusfrüchte sehr leicht Brücken bilden und durch das gegenseitige Verklemmen nicht mehr nachrollen, insbesondere wenn die Schalen gewachst sind, sodass die Entsaftungsmaschine keinen Nachschub erhält und eine Bedienungsperson von Hand die Förderunterbrechung beheben muss.

Eine Vorrichtung gemäß dem Oberbegriff des Anspruchs 1 ist offenbart im Dokument FR-A-2 271 142.

Der vorliegenden Erfindung lag daher die Aufgabe zugrunde, eine Vorrichtung zu schaffen, die mit Sicherheit die Weiterförderung von in einem Vorratsbehälter enthaltener und zur Brückenbildung neigender Ware wie insbesondere Früchten in eine bestimmte Richtung zwecks Einzelabgabe einer Wareneinheit durch eine Austrittsöffnung gewährleistet. Zur Lösung dieser Aufgabe weist die Vorrichtung die Merkmale nach Anspruch 1 auf. Durch die im Querschnitt unrunden Walzen werden die Früchte in Bewegung gehalten und insbesondere in einer mit der Drehrichtung der Walzen übereinstimmenden Richtung weitergefördert. Vorzugsweise sind zu beiden Seiten der in einer Reihe angeordneten Walzen noch auf- und abbewegbare Stössel vorhanden, die durch die schräge Behälterbodenfläche hindurch in den Zitrusfrüchte-Haufen hineinstossen und die Früchte ständig in Bewegung halten.

Ein Ausführungsbeispiel des Erfindungsgegenstandes wird nachfolgend anhand der Zeichnungen näher erläutert. Es zeigen:
Fig. 1 das Prinzip der Fördervorrichtung in einem Behälter, schematisch von der Seite gesehen;
Fig. 2 die Vorrichtung in dem Behälter von oben gesehen.
Fig. 3 und Fig. 4 eine abgewandelte Ausführungsform der Vorrichtung, schematisch von der Seite und von oben gesehen.

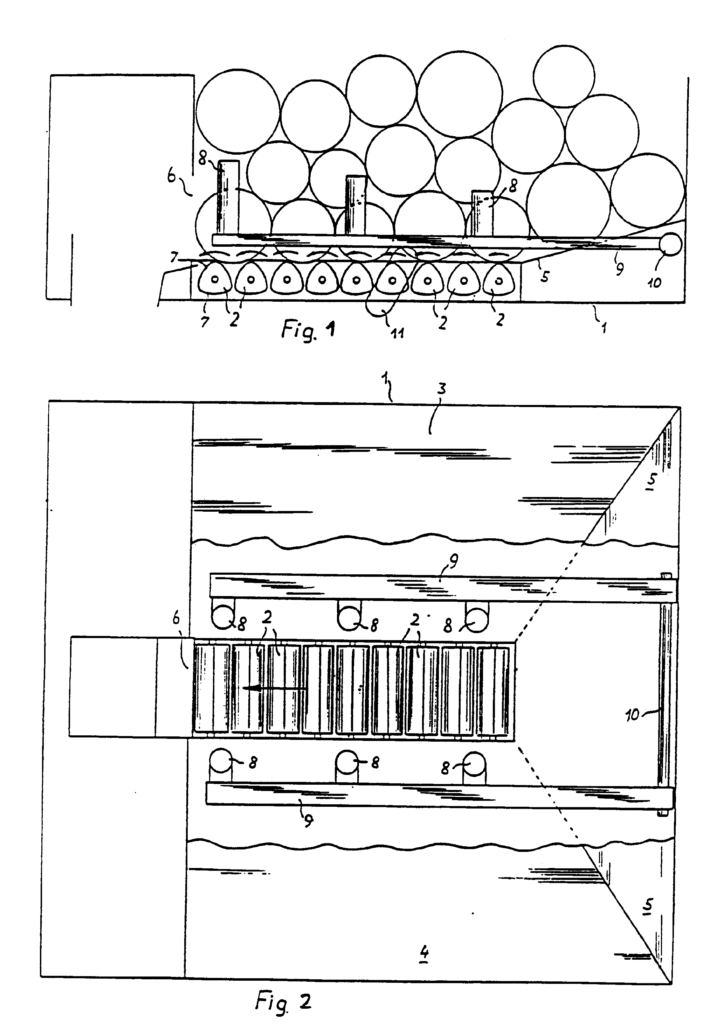

In dem Behälter 1 ist auf der Längsmitte ein Teil der Bodenfläche von einer Mehrzahl in Reihe hintereinander angeordneter Walzen 2 gebildet, die alle im gleichen Drehrichtungssinn gemäss den Pfeilen in Fig. 1 rotierend angetrieben sind, beispielsweise durch in der Zeichnung nicht dargestellte, auf den Achsen der Walzen 2 angeordnete Zahnräder und Zwischenzahnräder. Der übrige Behälterboden besteht aus zu den Behälterwänden schräg ansteigenden Bodenflächenabschnitten 3 und 4 auf gegenüberliegenden Seiten der Walzenreihe und einem weiteren Bodenflächenabschnitt 5, der von zwei Behälterecken zu der ersten Walze 2 hin abwärts geneigt ist. Hinter der letzten Walze 2 besitzt der Behälter 1 in der senkrechten Wand eine Öffnung 6, durch die jeweils eine Zitrusfrucht nach unten in eine unterhalb des Vorratsbehälters 1 befindliche, nicht dargestellte Maschine zum Entsaften der Frucht fällt. Die Bewegung der Früchte in Richtung der Öffnung 6 wird durch die Drehung sämtlicher Walzen 2 im gleichen Drehrichtungssinn entsprechend den Pfeilen in Fig. 1 verursacht. Damit die Früchte in diese Richtung gefördert werden, haben die Walzen 2 alle einen unrunden querschnitt mit in Umfangsrichtung abwechselnd einen verschieden grossen radialen Abstand aufweisenden Oberflächensektoren. Im dargestellten Beispiel weisen die Walzen 2 einen Querschnitt mit einer aus drei konvex gewölbten Umfangspartien 7 zusammengesetzten Umfangsform auf.

Da der Vorratsbehälter 1 eine grössere Menge von Früchten in mehreren Lagen übereinander enthält und die Früchte die Tendenz zur Brückenbildung haben, insbesondere wenn die Schalen der Früchte gewachst sind und sie dadurch eher aneinander haften, reicht u.U. die durch die unrunden Walzen 2 verursachte Bewegung zur Verhinderung der Brükkenbildung nicht aus. Um die gesamte Menge der in dem Vorratsbehälter 1 vorhandenen Früchte in ständiger Bewegung zu halten, sind daher zu beiden Seiten der Reihe von Walzen 2 Stössel 8 in Abständen voneinander angeordnet, die sich zwischen den Früchten auf- und abbewegen, sodass diese ihre Lage dauernd verändern müssen. In der dargestellten Ausführungsform sind auf jeder Seite jeweils drei Stössel 8 an einer Schiene 9 befestigt und die beiden unterhalb des schrägen Behälterbodens sich erstrekkenden parallelen Schienen 9 sind an einem Schienenende um eine die Schienen miteinander verbindende Schwenkachse 10 schwenkbar. Unterhalb jeder der Schienen 9 ist an einer Achse einer der Walzen 2 ein umlaufender Nocken 11 befestigt (Fig. 1), der die regelmässige Auf- und Abbewegung der Stössel 8 bewirkt.

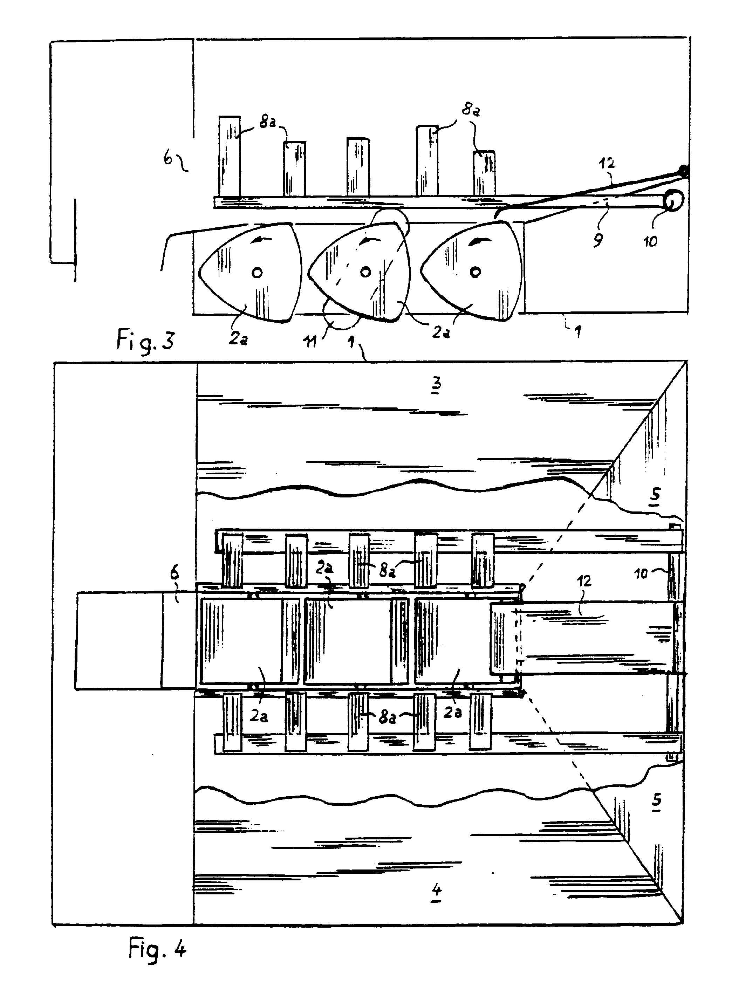

Bei der abgewandelten Ausführungsform gemäss Fig.3 und Fig.4 ist ein Teil der Bodenfläche des Behälters 1 von drei in Reihe hintereinander angeordneten Walzen 2a gebildet, die wesentlich grösser sind als die Walzen der ersten Ausführungsform und die Zitrusfrüchte wirksamer in einer Richtung weiterbewegen. Ebenso sind die zu beiden Seiten der Walzen an den Schienen 9 angeordneten und auf- und abbewegbaren Stössel 8a wesentlich breiter als die zylindrischen Stössel der ersten Ausführungsform und sie sind in der aufeinanderfolgenden Reihe ungleichmässig hoch und bewegen sich auf der einen Seite der Walzenreihe doppelt so häufig auf und ab, wie auf der gegenüberliegenden Seite, was durch unterschiedliche Form zweier Nocken 11, beispielsweise als einfacher Nocken und als Doppelnocken, an je einer Walzenachse auf einfache Weise erreichbar ist. Die Schienen 9 sind hierbei seperat um die Achse 10 schwenkbar. Alle diese Massnahmen dienen dazu, die Brückenbildung im mit Früchten gefüllten Behälter zu verhindern. Dazu dient zusätzlich auch ein oberhalb der Schwenkachse 10 an der Wand des Behälters 1 schwenkbar angebrachtes Blech 12, das mit seinem anderen Ende auf der letzten Walze 2a aufliegt und durch die Drehung der unrunden Walze auf- und abgeschwenkt wird, sodass die Früchte auch im Bereich des schräg ansteigenden Bodenflächenabschnitts 5 in Bewegung gehalten werden.

## Patentansprüche

1. Vorrichtung zur Förderung von Ware in einer vorgegebenen, im wesentlichen horizontalen Richtung mittels am Boden eines Behälters (1) parallel nebeneinander angeordneter, einen unrunden, als regelmässiges Mehreck ausgebildeten Querschnitt aufweisender Walzen (2), die gleichsinnig mit derselben Winkellage rotierend antreibbar sind, um die auf den Walzen aufliegende Ware in der Drehrichtung der Walzen und in Richtung zu einer Behälteröffnung weiter zu bewegen, dadurch gekennzeichnet, dass die Ware z.B. aus Zitrusfrüchten besteht, und dass der Behälterboden ausserhalb des auf seiner Längsmitte befindlichen Walzenbereichs zu den Wänden des mit der Ware angefüllten Vorratsbehälters (1) schräg ansteigt, dass die dicht nebeneinander angeordneten Walzen (2) einen gleichen als Mehreck mit gekrümmten Seiten (7) ausgebildeten Querschnitt aufweisen und dass zu beiden Seiten der Reihe von Walzen (2) je eine Mehrzahl in Abständen voneinander angeordneter Stössel (8,8a) zum Bewegen der Ware zwecks Verhinderung der Brückenbildung auf- und abbewegbar sind.

2. Vorrichtung nach Anspruch 1, dadurch gekennzeichnet, dass die Walzen (2) einen Querschnitt mit einer aus drei konvex gewölbten Umfangspartien (7) zusammengesetzten Umfangsform aufweisen.

3. Vorrichtung nach Anspruch 1, dadurch gekennzeichnet, dass für die Einzelabgabe einer Wareneinheit aus dem Vorratsbehälter (1) dieser eine Austrittsöffnung (6) in der an die in Förderrichtung letzte Walze (2) anschliessenden Behälterwand aufweist.

4. Vorrichtung nach Anspruch 1, dadurch gekennzeichnet, dass die auf jeweils einer Seite der Walzenreihe (2) angeordneten Stössel (8) gemeinsam an einer Schiene (9) angeordnet sind und die zwei parallelen Schienen (9) um eine an einem Schienenende die Schienen verbindende Schwenkachse (10) schwenkbar und mittels eines jeweils unterhalb einer Schiene (9) angeordneten und von einer der Walzenachsen drehend angetriebenen Nockens (11) auf- und abbewegbar sind.

5. Vorrichtung nach Anspruch 1, dadurch gekennzeichnet, dass die Stössel (8a) sich auf der einen und der anderen Seite der Walzenreihe (2) mit unterschiedlicher Taktzahl auf- und abbewegen, vorzugsweise im Verhältnis 1:2.

6. Vorrichtung nach Anspruch 5, dadurch gekennzeichnet, dass die Stössel (8a) jeweils auf der Schiene (9) aufrecht stehend angeordnete Quader sind, die eine unterschiedliche Höhe aufweisen.

## Claims

1. An apparatus for transporting a commodity in a predetermined,substantially horizontal direction by means of a plurality of rollers (2) having a non circular cross-section in form of a regular polygon and being positioned parallel to each other at a container floor and being adapted to be driven in the same sense and same angular position in order to transport the commodity resting on the rollers (2) in the direction of rotation of the rollers and the direction towards an opening,characterized in that the commodity consists for instance of citrus fruits and that the container floor (3.4) outside its longitudinal center area at which the rollers are located rises obliquely relative to the walls of the container (1) filled with the commodity,that the rollers (2) are positoned closely adjacent of each other and have equal cross sectional shapes in form of a polygon with curvilinear surfaces (7) and that at both sides of the row of rollers (2) a plurality of pistons (8.8a) are arranged at distances from each other and are adapted to be moved upwards and downwards to move the commodity in order to prevent the forming of bridges.

2. The apparatus of claim 1, in which the rollers (2) comprises a cross-section having a circumferential shape composed of three convexly curved circumference sections (7).

3. The apparatus of claim 1. in which the supply container (1) comprises a discharge opening (6) in the container wall which follows seen in the direction of transport the last roller (2) for allowing a discharge of one single article of the commodity at a time.

4. The apparatus of claim 1, in which the respective pistons (8) arranged at a respective side of the row of rollers (2) are commonly positioned at a rail (9), and in which the accordingly two rails (9) are pivotable around a pivot axis (10) which interconnects the rails at one end thereof, and are adapted to be moved up and down by means of a respective cam (11) positioned under a rail and rotationally driven by one of the axes of the rollers(2).

5. The apparatus of claim 1, in which the pistons (8a) at the one side and the other side of a row of rollers (2) move up and down with a different timing, preferably in a relation of 1 : 2.

6. The apparatus of claim 5, in which the pistions (8a) are respective blocks positioned upstanding on the rail (9) and having various hights.

## Revendications

1. Dispositif de transport dans une direction prédéterminée, essentiellement horizontale, au moyen de cylindres (2) présentant une section en forme de polygone régulier, non circulaire, disposés parallèlement les uns aux autres sur le fond d'un réservoir (1), qui peuvent être mis en rotation avec la même position angulaire afin de déplacer les denrées reposant sur les cylindres dans la direction de rotation des cylindres et en direction d'un orifice de réservoir, caractérisé en ce que les denrées sont constituées, par exemple, de fruits citrus et que le fond du réservoir, en dehors de la zone des cylindres se trouvant sur son axe longitudinal, monte obliquement vers les parois du réservoir d'alimentation (1) rempli des denrées, en ce que les cylindres (2) disposés immédiatement les uns à côté des autres, présentent une section égale en forme de polygone à côtés incurvés (7) et que, des deux côtés de la rangée des cylindres (2), sont disposés de nombreux poussoirs (8, 8a) placés à distance les uns des autres et pouvant être soulevés et abaissés pour mettre en mouvement la denrée afin d'empêcher la formation de ponts.

2. Dispositif selon la revendication 1, caractérisé en ce que les cylindres (2) présentent une forme périphérique composée de trois parties périphériques (7) incurvées de forme convexe.

3. Dispositif selon la revendication 1, caractérisé en ce que, pour extraire séparément une unité de denrée du réservoir d'alimentation (1), celui-ci présente un orifice de sortie (6) dans la paroi de réservoir proche du dernier cylindre (2) dans la direction de l'avancement.

4. Dispositif selon la revendication 1, caractérisé en ce que les poussoirs (8) disposés sur l'un et l'autre côté de la rangée de cylindre (2) sont montés en commun sur un rail (9) et que les deux rails parallèles (9) sont montés à pivot autour d'un axe de pivotement (10) reliant les rails et peuvent être soulevés et abaissés au moyen d'une came (11) mise en rotation par l'un des axes de cylindre et disposés en dessous d'un rail (9).

5. Dispositif selon la revendication 1, caractérisé en ce que les poussoirs (8a) se soulèvent et s'abaissent sur l'un et l'autre côté de la rangée de cylindres (2) avec des fréquences différentes, par exemple suivant un rapport 1:2.

6. Dispositif selon la revendication 5, caractérisé en ce que les poussoirs sont chacun des parallélépipèdes disposés verticalement sur le rail (9) et présentant des hauteurs différentes.
